**Europäisches Patentamt**

**European Patent Office**

**Office européen des brevets**

(19)

(11) Publication number : **0 366 044 B1**

(12) # EUROPEAN PATENT SPECIFICATION

(45) Date of publication of patent specification :
**12.04.95 Bulletin 95/15**

(51) Int. Cl.[6] : **H04L 12/10**

(21) Application number : **89119649.5**

(22) Date of filing : **23.10.89**

---

(54) **Data communications system.**

---

(30) Priority : **24.10.88 JP 267658/88**
**11.10.89 JP 265516/89**

(43) Date of publication of application :
**02.05.90 Bulletin 90/18**

(45) Publication of the grant of the patent :
**12.04.95 Bulletin 95/15**

(84) Designated Contracting States :
**DE FR GB**

(56) References cited :
**GB-A- 2 119 206**
**GB-A- 2 161 665**
**PATENT ABSTRACTS OF JAPAN, vol. 4, no. 87**
**(E-16)[569], 21st June 1980; & JP-A-55 52 654**
**(SUMITOMO JUKIKAI KOGYO K.K.) 17-04-1980**

(72) Inventor : **Sakuragi, Satoshi**
**2-201, Kamikurata-danchi**
**259 Kamikurata-cho**
**Totsuka-ku Yokohama-shi Kanagawa (JP)**
Inventor : **Kuroda, Takashi**
**1022, Nakayama-cho**
**Midori-ku**
**Yokohama-shi Kanagawa (JP)**
Inventor : **Ikeda, Takeshi**
**4-2-14, Higashirinkan**
**Sagamihara-shi**
**Kanagawa (JP)**

(74) Representative : **Tiedtke, Harro, Dipl.-Ing. et al**
**Patentanwaltsbüro**
**Tiedtke-Bühling-Kinne & Partner**
**Bavariaring 4**
**D-80336 München (DE)**

(73) Proprietor : **MURATA MANUFACTURING CO., LTD.**
**2-26-10, Tenjin**
**Nagaokakyo-shi,Kyoto (JP)**

EP 0 366 044 B1

## Description

BACKGROUND OF THE INVENTION

Field of the Invention

The present invention relates to an unit which is provided with a communications interface circuit, such as RS 232C, more particularly to an improvement of a data communications system comprising a data terminal equipment (hereinafter simply referred as DTE) and a data communications equipment (hereinafter simply referred as DCE), that is, a modem.

Description of the Prior Art

In recent years, a data communication, in which data is received or sent among data terminal equipments (hereinafter referred to DTE) over telephone lines, has rapidly prevailed throughout the world.

With the development of this data communication, a communications interface has been normalized in order to establish a standardization of a data transmission control among DTEs. For example, RS 232C interface was standardized by EIA (Electronics Industries Association) as an interface to link between a DTE and a modem. Since then, RS 232C interface has been put into practice as the international standard.

Accordingly, the standardized interface circuit allowed an independent DTE to link with another DTE, realizing the data communication.

However, in the conventional communications interface, such as RS 232C interface, a load output from the driver circuit is specified to be from 5V to 15V as shown in Table 1.

This means that the driver circuit of each communications interface transmits a signal with a relatively large amount of electric power taking into account that a receiving signal should be secured at the receiver circuit maintaining the specified voltage even when the signal is transmitted through a cable with a maximum length. For example, in the case of RS 232C interface, a voltage ranging from 5V to 15V is to be secured at the receiver after the signal passed through the cable of 15 meters.

Moreover, in the conventional technique, a data communications system, with which a communications interface circuit to realize a data communication is provided, is driven by its dedicated power supply circuit.

Furthermore, from document GB-A-2 119 206 a dataset apparatus is known comprising extracting means for extracting electrical power from electrical signals received through a plurality of transmission lines by means of diodes which charge capacitors. Document JP-A-55 52 654 shows a signal transmission system which has not the necessity of providing a power source for every transmission unit.

From document GB-A-2 161 665 a data communication system according to the preamble of the claim 1 is known, i.e. a data communication system which is equipped with a communications interface circuit and receives signals from another apparatus via a plurality of signal receiving lines, comprising a plurality of input circuits whose impedance is predetermined, each of said input circuits receiving a signal through one of said signal receiving lines and generating a signal output with a little electric power to be sent to an interface circuit; and a power supply means which obtains a remaining electric power separated from said receiving signals by said input circuits.

TABLE 1

Specifications of RS 232C

| Operation | | | Unbalanced |
|---|---|---|---|
| Power Supply Voltage | | | ±12V |
| D C r i i r v c e u r i t | Maximum cable extension | | 15m |
| | Maximum data rate | | 10kBaud |
| | No-load output voltage | | ≦25V |
| | Load output voltage | | 5 ~15V |
| | Output resistance value when power is off. | | ≧300 Ω |
| | Output current value when a circuit is shorted. | | ≦500mA |
| | Through output rate | | ≦30V/μS |
| R C e i c r e c i u v i e t r | Input resistance | | 3k~7kΩ |
| | Threshold | | -3 ~ +3V |
| | Maximum input voltage | | ±25V |

Normally and as has been described above, there has been a problem that the independent power supply is necessary for the driver, for example, the DTE and the receiver circuit, such as the DCE, respectively in the conventional data communications system, which a communications interface circuit is built in. Therefore, the communication system was hard to be miniaturized.

Another fact is that power has been wastefully dissipated in the receiver circuit of the DCE because the DCE, which the communications interface circuit is provided with, has usually been arranged in proximate to the DTE, such as a personal computer, linking them with a short cable, so that the signal loss can result only in small amount.

## SUMMARY OF THE INVENTION

The object of this invention is to provide a method of decreasing the size of a data communications system and increasing the efficiency of supply power, for example, when using a short cable to link between a data communication equipment and a data terminal equipment or when both the DCE and DTE are directly linked together with a connector by employing a new circuit configuration which utilizes the electric power of a receiving signal transmitted through the cable as power of the DCE.

To achieve the above object, a data communication system according to the claim 1 has been provided.

Employing such a data communication system allows to furnish power to the DCE by utilizing the electric power of the receiving signal, thus enabling the miniaturization and efficiency improvement of the data communication system.

That is, when a signal is transmitted from another unit, for example, such as DTE, through a communication cable, this signal is received at a high impedance input circuit. At this time, the signal which is branched from an input terminal of the high impedance input circuit is delivered to a power supply circuit. In the power supply circuit, power is drawn from the receiving signal, and then this electric power is delivered to the DCE. Therefore, the present invention can achieve the aforementioned effects of the power supply system, the miniaturization of the DCE and the improvement of efficiency.

The power supply circuit may also be rearranged to the circuit configuration which involves a plurality of rectifiers to commutate the receiving signal and a DC-DC converter to convert the rectified signal to a signal with a predetermined voltage.

Furthermore, this DC-DC converter can be modified to a self-exciting type converter comprising a self-exciting oscillator, a transformer and a rectifier output block where produces two output voltages, that is, a positive output voltage and a negative output voltage.

Besides, a differential circuit can be used in the self-exciting oscillator so as to limit an input current transmitted to the transformer. If the differential circuit is employed, the power furnished to the DCE can be limited within a desired range. The differential circuit may be comprised of a differential amplifier circuit which includes, for example, such as operational amplifier.

If a communication cable is provided with a plurality of signal receiving lines, the corresponding number of the high impedance input circuit and that of power supply circuit are equipped to the DCE and a plurality of receiving signals are drawn from input terminals of the impedance input circuits. Thus, it is possible to establish a power output block in the DCE to sum up every output produced at some predetermined circuits of all the power supply circuits. This output block can be replaced by a node to add up each output produced at the predetermined circuits of all power supply circuits.

If RS 232C interface circuit is used for a communications interface circuit in the DCE of the present invention, or the data communications system, then the DCE will become the system that complies with the RS 232C interface standard.

## BRIEF DESCRIPTION OF THE ACCOMPANYING DRAWINGS

FIG. 1 is a schematic diagram showing a configuration of a data communication system which comprises a data communications system. In this illustration, high impedance input circuit 22 and power supply circuit 24 featuring the present invention are illustrated.

FIG. 2 is a schematic diagram representing a circuit configuration of the high impedance input circuit 22 shown in FIG. 1.

FIG. 3 is a schematic diagram depicting a circuit configuration of the power supply circuit 24 illustrated in FIG. 1.

FIG. 4 is a schematic diagram representing a circuit configuration of the self-exciting oscillator 146 comprising differential circuit 154.

FIG. 5 is a schematic diagram denoting a circuit configuration of self-exciting oscillator 246 consisting of differential circuit 254 which includes operational amplifier 266.

## DETAILED DESCRIPTION OF THE PREFERRED EMBODIMENTS OF THE INVENTION

The foregoing and other objects, features and advantages of the invention will be apparent from the following more particular description of preferred embodiments of the invention, as illustrated in the accompanying drawings.

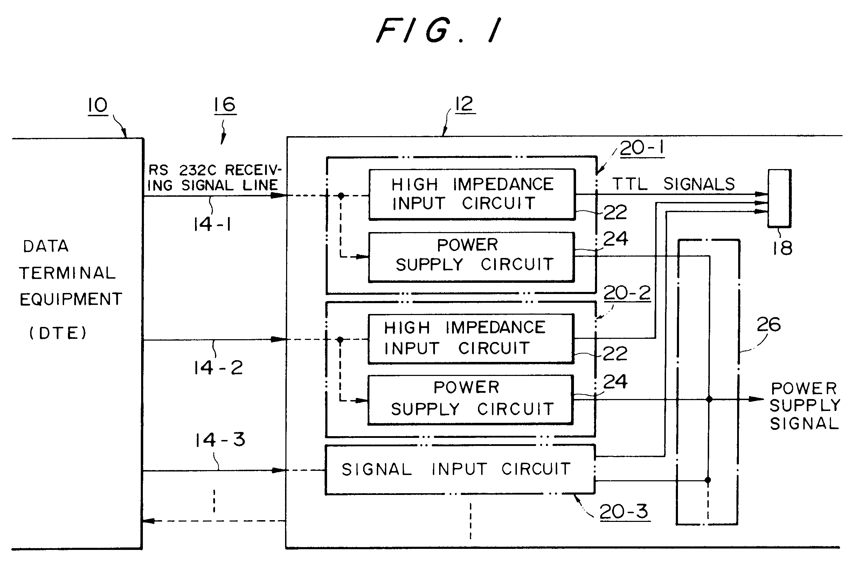

FIG. 1 is an overview of a data communications system. In FIG. 1, data communication is practiced between a driver circuit, that is, data terminal equipment (DTE) 10, and a receiver circuit, or data communications equipment (DCE) 12 in a communications interface, such as, RS 232C. The DTE 10 and DCE 12 are linked together by a communication cable comprising RS 232C signal receiving lines identified with numerals of 14-1, 14-2 and 14-3... . DCE 12, which contains RS 232C interface circuit 18, comprises a plurality of signal input circuits with numerals of 20-1, 20-2 and 20-3... .

In the present invention, each of the signal input circuits 20-1, 20-2 and 20-3..., is constituted of high impedance input circuit 22 and power supply circuit 24 connecting them in parallel. With this circuit configuration, receiving signals are sent to the RS 232C interface in the form of TTL signal with a microelectric power by way of the high impedance input circuit 22, while the remaining electric power of the receiving signals obtained through communication cable 16 is transmitted to power supply circuit 24, where power is drawn from the receiving signals as the power signal. Every power signal produced at some predetermined circuits of all the power supply circuit 24 are summed up at power output block 26, which consists of a node, and then the combined power is furnished to DCE 12 as a drive power.

In the conventional standard, according to the RS 232C interface standard, power is supplied to a signal input circuit considering a power loss which would be generated on the way of transmitting in a cable which extends more than 10 meters. Generally, most of this large amount of power has been wasted when a short cable is used. The present invention enables to utilize the wasted electric power as power of the DCE 12 efficiently.

In addition, in this embodiment, even if RS 232C interface signal is input with variations, a stable power can be furnished to the DCE 12 because this supply-voltage is obtained by summing up and arranging every output produced at some predetermined circuits of all the power supply circuits 24 at the power output block 26.

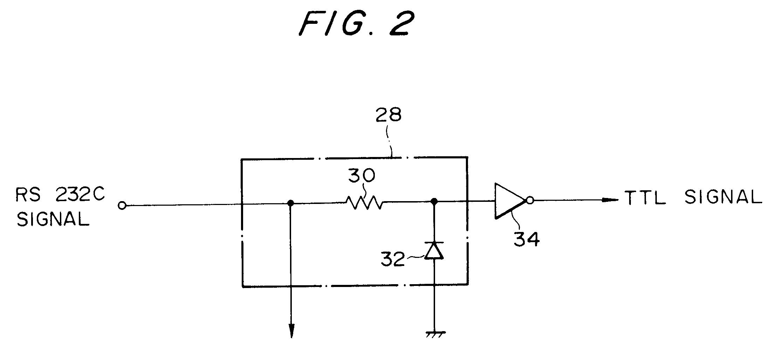

The circuit configuration of the high impedance input circuit 22 of the present invention is represented in FIG. 2. As the figure showing, the clamp circuit 28 of the high impedance input circuit is constituted with a configuration in which resistor 30 is connected in series with clamp diode 32 and also level conversion inverter 34 is connected to the junction of series connection.

The impedance of the resistor 30 is predetermined to a rather high enough to restrict the amount of power which is dissipated in the RS 232C interface input signal to a little amount. Also, the clamp diode 32 in the clamp circuit is used to cut off the reverse voltage. In addition, the level conversion inverter 34 is utilized to convert an input voltage to the voltage level which the DCE 12 requires.

In case a Zener diode is used instead of the clamp diode 32, the level conversion inverter 34 can be replaced by a LSTTL or a CMOS inverter.

For example, when +/- 12V receiving signal enters the clamp circuit 28 of the high impedance input circuit, the signal is then converted into a signal with the voltage ranging from 0 to 12V. Before long, the converted signal is sent to ensuing the level conversion inverter 34, where the signal is converted into a voltage level ranging from 0 to 5V, and then the signal is output from the inverter 34 in the form of TTL signal that is the appropriate form to be processed in an arbitrary manner by RS 232C interface circuit 18.

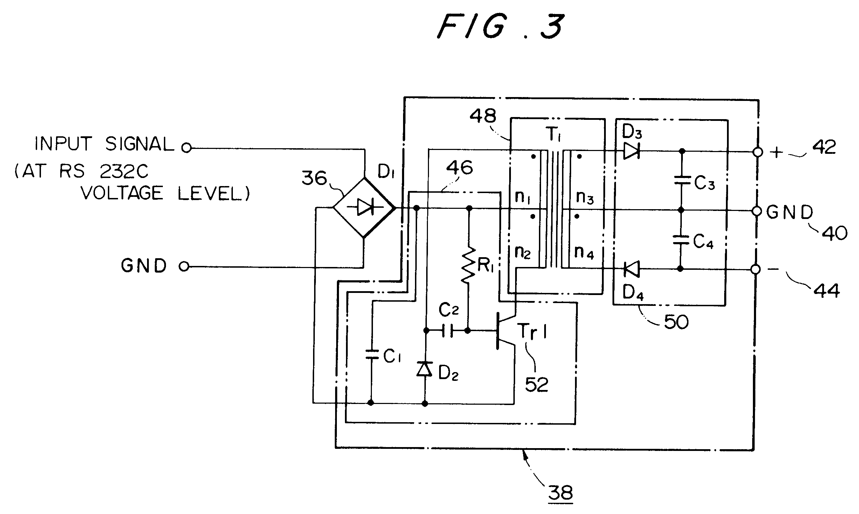

FIG. 3 represents a circuit configuration of the power supply circuit 24 in this embodiment. In FIG. 3, the power supply circuit 24 consists of the rectifier 36 and the DC-DC converter circuit 38.

As is generally known, the RS 232C interface standard requires a form of digital signal for its input, therefore, the power supply circuit 24 comprises the rectifier 36 at its input stage so as to convert the digital signal into a direct current signal. This rectifier is constituted as the full-wave rectifier type as shown in FIG. 3.

DC-DC converter circuit 38 is so-called a self-exciting converter. This converter circuit 38 is provided with GND terminal 40, positive output terminal 42 and negative output terminal 44 as the output terminal.

Since the self-exciting converter is a generally-known circuit, the detailed explanation for it is omitted in the specification. Only a brief explanation in respect of the constitution and function of the self-exciting converter in this embodiment will be described below.

The DC-DC converter circuit 38 in this embodiment is comprised of self-exciting oscillator 46, transformer 48 and rectifier output block 50. The self-exciting oscillator 46 includes transistor 52 whose base is connected to the anode of the rectifier 36 through resistor R 1 and whose emitter is connected to the cathode of the same rectifier 36. The collector of the transistor 52 is connected to the anode of the rectifier 36 through the primary winding n 2 of the transformer 48. Moreover, the transformer 48 is provided with a primary winding n 1, which is wounded in series with the primary winding n 2 with same polarity. The one end of the primary winding n 1 is connected to the cathode of diode D 2 whose anode is connected to the cathode of the rectifier 36. The other end of the primary winding n 1 is connected to the base of the transistor 52 through capacitor C 2. The anode and cathode of the rectifier 36 is connected across capacitor C 1.

The self-exciting type converter 38 in this embodiment is composed of the self-exciting oscillator 46 with the above mentioned circuit configuration. A brief explanation of the self-exciting oscillator 46 ensues on.

When a signal voltage from the DTE is applied to the rectifier 36, a base current is supplied to the transistor 52 by way of the resistor R 1. With the base current being furnished, the transistor 52 enters "on" status, and then the transistor 52 supplies the collector current to the primary winding of n 2.

Concurrently, a charging current is furnished from the anode of the rectifier 36 to the primary winding of n 1 through the capacitor C 2. This charging current acts to increase the conductivity of the transistor 56, so that the collector current of the transistor 52 can increase.

The current passed through the primary winding n 1 is instantly discharged from the capacitor C 2 because of its small capacitance value. With this result, the base current of the transistor 52 cannot increase in proportion to the increment of the collector current of the transistor. The correlation of the base current and the collector current will be represented as follows:

$$I_C > I_B * hfe \quad (1)$$

As depicted in the above equation, the transistor 52 instantly enters "off" when the amount of the collector current exceeds the amount of current that is obtained by multiplying the amount of base current by the current amplification factor.

During off status, the electromagnetic energy, which is stored in the capacitor C1 while the transistor 52

5

was in "on" status, flows from the primary winding n 1 to the capacitor C 1. This discharge results in applying a negative voltage to the capacitor C2, so that the transistor 52 can be adversely biased to maintain "off" status. After the discharge of electromagnetic energy from the diode D2 is completed, a base current is again supplied to the transistor 52 through the resistor R 1, and then the circuit continues self-excitation.

Accordingly, the excitation frequency, that is, the self-excitation frequency, of the self-exciting oscillator 46 is determined by the circuit constant and load of the oscillator.

The feature of the self-exciting oscillator 46 is in that the corresponding signal output circuit of the DTE 10 can be protected by specifying the bias constant C2 and R1 of this self-exciting oscillator 46. In other words, this constant C2 and R1 is determined so that the maximum input current $I_{max}$ applied to the power supply circuit 24 may satisfy the following equation.

$$I_{max} = \text{Input Signal Voltage / Load Impedance} \quad (2)$$

When the circuit is arranged to conform to the above equation, the input current saturates at the level of $I_{max}$ because the base current will be in short supply by the bias constant C2 and R1 when the load needs a large amount of current.

Because of the aforementioned self-exciting oscillation, a current flows with the reverse direction in the secondary winding coils n3 and n4, and this current is then stored in the capacitors C3 and C4 by way of diodes D3 and D4.

Consequently, the voltage level which corresponds to the turn ratio of the primary winding and the secondary winding is obtained at the respective output terminals 42 and 44 with the opposite polarity when comparing to the reference voltage of the GND terminal 40.

As has been described above, according to the DC-DC converter circuit 38 employed in this embodiment, power can be obtained in the range from 5V to 10V from RS 232C interface signal of +/-12V.

Furthermore, in this embodiment, every output produced at predetermined circuits of the power supply circuits 24 are added up at the power output block 26. Therefore, a full power is secured as a whole because the bias constant C 2 and R 1 is predetermined as has been described above, so that the operation of each of the converters can be sequentially restricted by the current saturation when each input current reaches its maximum.

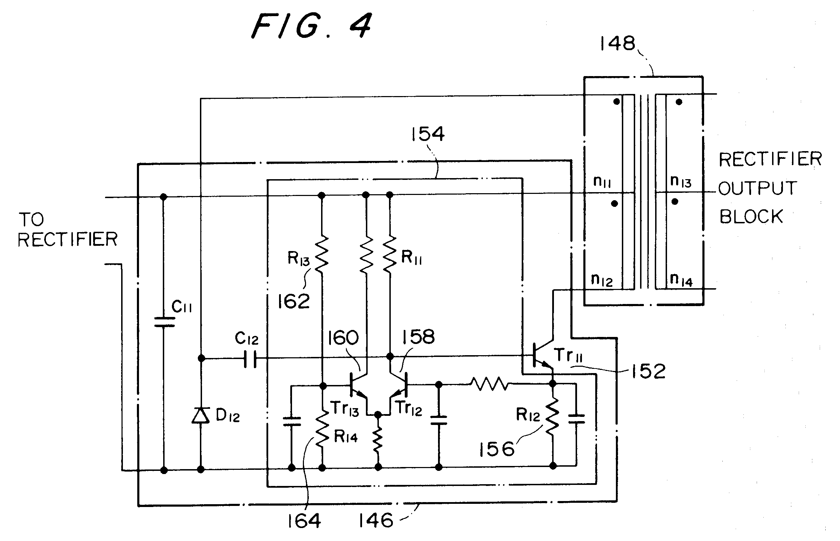

FIG. 4 shows a circuit configuration of self-exciting oscillator 146 which is employed in the second embodiment of the data communications system. This self-exciting oscillator 146 comprises differential circuit 154 which restricts a current supplied to the primary winding n 12 of transformer 148 under the control of transistor 152. Taking into account the difference between the self-exciting oscillators 46 and 146, the operation of the self-exciting oscillator 146 is now explained in the following.

According to FIG. 4, transistor 158 enters "on" status when the collector current Ic of the transistor 152 satisfies the equation below;

$$Ic * R12 > Vbe (Tr12) \quad (3),$$

where R12 represents a resistance value of resistor 156 and Vb (Tr12) denotes a base voltage of the transistor 158. With the result that, the base current of the transistor 152 is restricted and the input current to the primary winding n 12 of the transformer 148 is limited in consequence.

On the other hand, the base potential of transistor 160, which is connected differentially to the transistor 158, is determined by resistors 162 and 164. In the steady condition, the transistor 158 is held "off" and the transistor 160 is maintained in "on" in consequence. With these conditions, if the base potential of the transistor 158 exceeds that of the transistor 160, the transistor 158 will enter "on", resulting in restricting the base current of the transistor 152. Then, the base current of the transistor 158 decreases and the transistor 160 enters "on". The repetition of this chain of operation results in increasing the base current of the transistor 152 up to its allowable maximum value.

Therefore, the restriction values of the input current to the transformer 148, that is, the input limitation current, is determined in proportion to the input voltage to the self-exciting oscillator 146. If the excitation current of the transformer 148 is set to be free from any restriction, the input current Iin to the transformer 148 will be defined as;

$$Iin = (n13/n12)Io + (n14/n12)Io( - ) \quad (4),$$

where Io denotes a positive output current from the transformer 148 and Io(-) depicts a negative output current from the transformer 148.

Therefore, according to this embodiment, the DCE can constantly secure the maximum power because the input limitation current can be set so as to be proportional to the voltage of the RS 232C signal, that is, the output voltage of the rectifier.

In case a plurality of power supply circuits are provided to the DCE and also a power output block is arranged to supply power to the DCE after adding up every output produced at predetermined circuits of all power supply circuits, it will be possible to supply power without exceeding the allowable maximum current of the DCE.

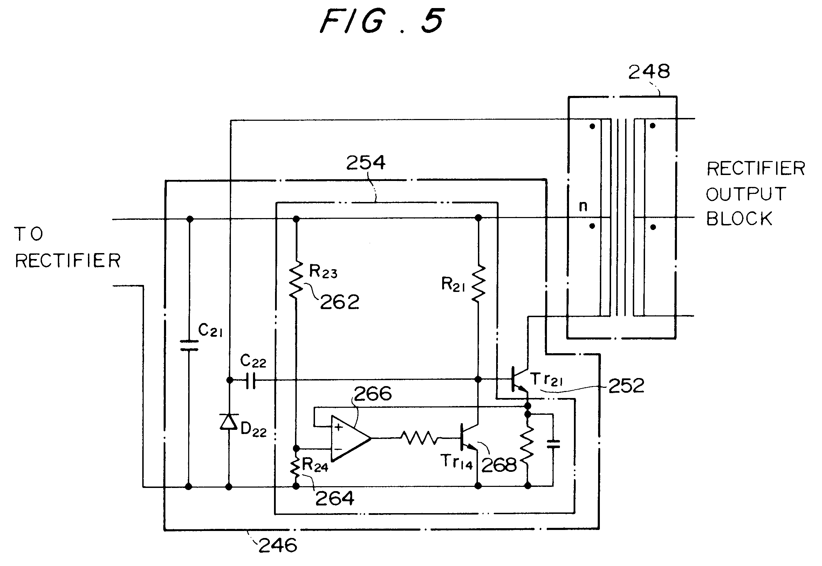

FIG. 5 illustrates a circuit configuration of self-exciting oscillator 246 in the third embodiment of the present invention. This oscillator 246 shown in this figure includes differential circuit 254 comprising operational amplifier 266.

In this embodiment, the emitter potential of transistor 252 and the potential divided by transistors 262 and 264 are compared at operational amplifier 266 instead of comparing between the base potential of the transistor 158 and that of the transistor 160 in FIG. 4.

The base potential of transistor 268, in other words, the base potential of transistor 252 can be determined based on the output current from the operational amplifier 266. Accordingly, as the same manner in FIG. 4, it becomes possible to set the input limitation current, and the same effects as shown in FIG. 4 can be secured.

In the preferred embodiments, though the example, which employs the RS 232C as the interface standard, has been described, the same effect will surely be achieved when applying the present invention to the data communications system, which employs an interface circuits complying with other standards, such as RS 422 etc..

As has been described above, according to the present invention, the miniaturization and the efficiency improvement of the data communication system are achieved because the voltage level of the signal, which is transmitted through the communication interface, is furnished to the DCE of the communications interface, saving one of the power supply circuits equipped to both DTE and DCE in the conventional system when linking them with a short cable or when connecting them directly with a connector.

## Claims

1. A data communication system which is equipped with a communications interface circuit and receives signals from another apparatus via a plurality of signal receiving lines (14), comprising:

   a plurality of input circuits (22) whose impedance is predetermined, each of said input circuits receiving a signal through one of said signal receiving lines and generating a signal output with a little electric power to be sent to an interface circuit (18); and

   a power supply means which obtains a remaining electric power separated from said receiving signals by said input circuits (22);

   said data communication system being

   **characterized in that**

   said predetermined impedance of said input circuits (22) is a high impedance;

   each of said input circuits (22) comprises a clamp circuit (28) which puts a clamp on one of said receiving signals;

   said power supply means is composed of a plurality of power supply circuits (24); and that said data communication system further comprises

   an electric power output block (26) which combines every output produced at some predetermined circuits of all power supply circuits (24) and supplies the combined electric power to said data communication system, whereby said receiving signals are also used as a drive power to be supplied to said data communication system.

2. A data communication system according to Claim 1, wherein each of said high impedance input circuits (22) comprises besides said clamp circuit (28) a level conversion inverter (34), which converts said signal obtained from said clamp circuit into a signal with a predetermined level and produces an output of the converted signal.

3. A data communication system according to Claim 1, wherein each of said clamp circuits (28) includes a resistor (30) which restricts the power of said receiving signal; and a clamp diode (32) which performs a clamp on said receiving signal output from said resistor, whose power is restricted with said resistor, and supplies the clamped signal to the corresponding level conversion inverter (34).

4. A data communication system according to Claim 1, wherein each of said power supply ciruits (24) includes a rectifier (36) which commutates the receiving signal obtained from the input terminal of said high impedance input circuit (22); and a DC-DC converter (38) which converts an output voltage produced by said rectifier into a direct voltage with another value.

5. A data communication system according to Claim 4, wherein each of said rectifiers (36) is a full-wave rectifier which executes a full-wave-rectification of the receiving signal obtained from the input terminal of the corresponding high impedance input circuit (22).

6. A data communication system according to Claim 4, wherein each of said DC-DC converters (38) is a self-exciting converter incorporating a self-exciting oscillator (46; 146; 246) which operates a self-exciting oszillation with a frequency determined by a circuit constant and a load of said DC-DC converter circuit; a transformer (48; 148; 248) which transforms an output oscillation produced by said self-exciting oszillator; and a rectification output block (50) which commutates the output from said transformer and then feeds the commutated current out.

7. A data communication system according to Claim 6, wherein each of said self-exciting oscillators comprises a differential circuit (154; 254) which confines input current transmitted to the corresponding transformer (148; 248) within a specified range of current value.

8. A data communication system according to Claim 7, wherein each of said differential circuits (254) contains a differential amplifier (266).

9. A data communication system according to Claim 6, 7 or 8, wherein each of said rectification output blocks (50) produces two output voltages, that is, a positive output voltage and a negative output voltage.

10. A data communication system according to Claim 1, wherein said electric power output block (26) consists of a node connecting output terminals of all said electric power supply circuits (24).

11. A data communication system according to Claim 1 or 10, wherein said communications interface circuit is RS 232C interface circuit.

12. A data communication system according to Claim 1, wherein said communications interface circuit is a RS 232C interface circuit; said clamp circuits (28) incorporate resistors (30) which restrict the power of said receiving signals and clamp diodes (32) putting a clamp on signals sent from said resistors and producing output of them; said high impedance input circuits (22) comprise besides said clamp circuits (28) level conversion inverters (34) which convert signals obtained from said clamp circuits to a predetermined level and produce the output of the converted signals; and said power supply circuits (24) incorporate rectifiers (36) which produce full-wave-rectification of the signals obtained from the input terminals of said plurality of high impedance input circuits, and DC-DC converters (38), that is, self-exciting converters consisting of self-exciting oszillators (46; 146; 246) which perform a self-excitation with a predetermined frequency determined by a circuit constant and a load, transformers (48; 148; 248) which transform oscillation output produced by said self oscillators, and rectification output blocks (50) which produce output by rectifying the output from said transformers.

13. A data communication system according to Claim 12, wherein said self-exciting oscillators (146; 246) include differential circuits (154; 254) which confine currents transmitted to said transformers (148; 248) within a specified range of current value.

14. A data communication system according to Claim 13, wherein said differential circuits (254) include differential amplifiers (266).

## Patentansprüche

1. Datenkommunikationssystem, welches mit einer Kommunikations-Schnittstellenschaltung ausgerüstet ist, und Signale von einem anderen Gerät über eine Vielzahl von Signalempfangsleitungen (14) empfängt, mit:

einer Vielzahl von Eingangsschaltungen (22) mit vorbestimmter Impedanz, wobei jede der Eingangsschaltungen ein Signal durch eine der Signalempfangsleitungen empfängt und ein an die Schnittstellenschaltung (18) zu sendendes Ausgangssignal mit einer geringen elektrischen Leistung erzeugt; und mit

einem Stromspeisemittel, welches eine von den Eingangsschaltungen (22) aus den Empfangssignalen abgetrennte restliche elektrische Leistung bezieht;

**dadurch gekennzeichnet**, daß

die Eingangsschaltungen (22) mit der vorbestimmten Impedanz hochohmige Eingangsschaltungen sind;

jede der Eingangsschaltungen (22) eine Klemmschaltung (28) enthält, welche eines der empfangenen Signale klammernd abfängt;

das Stromspeisemittel aus einer Vielzahl von Stromspeiseschaltungen (24) zusammengesetzt ist; und daß

das Kommunikationssystem des weiteren einen elektrischen Leistungsabgabeblock (26) enthält, der jedes von einigen vorbestimmten Schaltungen erzeugte Ausgangssignal aller Stromspeiseschaltungen (24) zusammensetzt und die zusammengesetzte elektrische Leistung an das Datenkommunikationssystem liefert, wodurch die Empfangssignale auch zum Speisebetrieb für das Datenkommunikationssystem verwendet werden.

2. Datenkommunikationssystem nach Anspruch 1, in dem jede höchohmige Eingangsschaltung (22) neben der Klemmschaltung (28) einen Pegelumsetz- Inverter (34) enthält, der das aus der Klemmschaltung gewonnene Signal in ein Signal mit einem vorbestimmten Pegel wandelt und ein Ausgangssignal des gewandelten Signals ausspeist.

3. Datenkommunikationssystem nach Anspruch 1, bei dem jede Klemmschaltung (28) einen Widerstand (30) enthält, der die Leistung des Empfangssignals beschränkt; und eine Abfangdiode (32), die eine Klammerung des von dem Widerstand abgegebenen, in seiner Leistung durch den Widerstand begrenzten Empfangssignals bewirkt, wobei das geklammerte Signal an den zugehörigen Pegelumsetz- Inverter (34) geliefert wird.

4. Datenkommunikationssystem nach Anspruch 1, bei dem jede Stromspeiseschaltung (24) sowohl einen Gleichrichter (36) enthält, der das Empfangssignal aus dem Eingangsanschluß der Eingangsschaltung (22) kommutiert, als auch einen DC- DC-Wandler (38), der eine von dem Gleichrichter erzeugte Ausgangsspannung in eine Gleichspannung mit einem anderen Wert umsetzt.

5. Datenkommunikationssystem nach Anspruch 4, bei dem jeder Gleichrichter (36) ein Brückengleichrichter ist, der eine Zweiweg- Gleichrichtung des von dem Eingangsanschluß der betreffenden hochohmigen Eingangschaltung (22) gewonnenen Empfangssignals durchführt.

6. Datenkommunikationssystem nach Anspruch 4, in dem jeder DC- DC- Wandler (38) ein selbsterregter Wandler ist, der aufgebaut ist mit: einem selbsterregten Oszillator (46; 146; 246), der mit einer Frequenz schwingt, die von einer Schaltungskonstante und einer Belastung der DC- DC- Wandlerschaltung bestimmt wird; einem Transformator (48, 148; 248), der eine von dem selbsterregten Oszillator erzeugte Schwingung transformiert; und mit einem Gleichrichtungs- Abgabeblock (50), der das Ausgangssignal aus dem Transformator kommutiert und dann den kommutierten Strom ausspeist.

7. Datenkommunikationssystem nach Anspruch 6, bei dem jeder selbsterregte Oszillator eine Differentialschaltung (154; 254) enthält, die den auf den betreffenden Transformator (148; 248) übertragenen Eingangsstrom auf einen spezifizierten Stromwertbereich beschränkt.

8. Datenkommunikationssystem nach Anspruch 7, dessen Differentialschaltungen (254) jeweils einen Differentialverstärker (266) enthalten.

9. Datenkommunikationssystem nach Anspruch 6, 7 oder 8, in dem jeder Gleichrichtungs Abgabeblock (50) zwei Ausgangsspannungen erzeugt, deren eine eine positive Ausgangsspannung und deren andere eine negative Ausgangsspannung ist.

10. Datenkommunikationssystem nach Anspruch 1, dessen elektrischer Leistungsabgabeblock (26) aus einem Knoten besteht, der die Ausgangsanschlüsse aller elektrischen Stromspeiseschaltungen (24) verbindet.

11. Datenkommunikationssystem nach Anspruch 1 oder 10, dessen Kommunikations- Schnittstellenschaltung eine RS 232C-Schnittstellenschaltung ist.

12. Datenkommunikationssystem nach Anspruch 1, dessen Kommunikations- Schnittstellenschaltung eine RS 232C-Schnittstellenschaltung ist; dessen Klemmschaltungen (28) die die Leistung der Empfangssi-

EP 0 366 044 B1

gnale begrenzende Widerstände (30) und Abfangdioden (32) enthalten, die die aus den Widerständen gelieferten Signale klammernd abfangen und ein Ausgangssignal dieser erzeugen; wobei die hochohmigen Eingangsschaltungen (22) neben den Klemmschaltungen (28) Pegelumsetz- Inverter (34) enthalten, die von den Klemmschaltungen erhaltene Signale auf einen vorbestimmten Pegel umsetzen und das Ausgangssignal der umgesetzten Signale erzeugen; und dessen Stromspeiseschaltungen (24) ausgestattet sind mit: Gleichrichtern (36), die eine Zweiweg- Gleichrichtung der aus den Eingangsanschlüssen empfangenen Signale aus der Vielzahl der hochohmigen Eingangsschaltungen bewirken, und DC- DC- Wandler (38), d. h., selbsterregte Wandler mit selbsterregten Oszillatoren (46; 146; 246), die selbsterregt auf einer von einer Schaltungskonstante und einer Belastung vorbestimmten Frequenz schwingen; Transformatoren (48; 148; 248), die von den selbsterregten Oszillatoren erzeugte Schwingungen transformieren, und mit Gleichrichtungs- Abgabeblöcken (50), die eine Ausspeisung durch Gleichrichtung der Ausgangssignale aus den Transformatoren bewirken.

13. Datenkommunikationssystem nach Anspruch 12, dessen selbsterregte Oszillatoren (146, 246) Differentialschaltungen (154; 254) enthalten, die die auf die Transformatoren (148, 248) übertragenen Ströme auf einen festgelegten Stromwertbereich begrenzen.

14. Datenkommunikationssystem nach Anspruch 13, dessen Differentialschaltungen (254) Differentialverstärker (266) enthalten.


**Revendications**

1. Système de communication de données qui est équipé d'un circuit d'interface de communication et qui reçoit des signaux d'un autre appareil via une pluralité de lignes de réception de signaux (14), comprenant :
    une pluralité de circuits d'entrée (22) dont l'impédance est prédéterminée, chacun desdits circuits d'entrée recevant un signal via une desdites lignes de réception de signaux et générant une sortie de signal avec une faible puissance électrique à envoyer à un circuit d'interface (18) ; et
    un dispositif d'alimentation qui obtient une puissance électrique restante séparée desdits signaux de réception par lesdits circuits d'entrée (22) ;
    ledit système de communication de données étant caractérisé en ce que
    ladite impédance prédéterminée desdits circuits d'entrée (22) est une impédance élevée ;
    chacun desdits circuits d'entrée (22) comprend un circuit de fixation de niveau (28) qui fixe un niveau d'un desdits signaux de réception ;
    ledit dispositif d'alimentation électrique est composé d'une pluralité de circuits d'alimentation électrique (24) ; et en ce que ledit système de communication de données comprend en outre :
    un bloc de sortie d'alimentation électrique (26) qui combine chaque sortie produite sur certains circuits prédéterminés de tous les circuits d'alimentation électrique (24) et fournit l'alimentation électrique combinée audit système de communication de données, de sorte que lesdits signaux de réception sont aussi utilisés comme puissance de commande à appliquer audit système de communication de données.

2. Système de communication de données selon la revendication 1, dans lequel chacun desdits circuits d'entrée de haute impédance (22) comprend en plus dudit circuit de fixation de niveau (28) un inverseur de conversion de niveau (34), qui convertit ledit signal obtenu à partir dudit circuit de fixation en un signal avec un niveau prédéterminé et produit une sortie du signal converti.

3. Système de communication de données selon la revendication 1, dans lequel chacun desdits circuits de fixation de niveau (28) comprend une résistance (30) qui limite la puissance dudit signal de réception ; et une diode de fixation de niveau (32) qui réalise une fixation de niveau de ladite sortie de signal de réception par ladite résistance, dont la puissance est limitée avec ladite résistance, et qui fournit le signal de fixation de niveau à l'inverseur de conversion de niveau correspondant (34).

4. Système de communication de données selon la revendication 1, dans lequel chacun desdits circuits d'alimentation électrique (24) comprend un redresseur (36) qui commute le signal de réception obtenu par la borne d'entrée dudit circuit d'entrée de haute impédance (22); et un convertisseur continu-continu (38) qui convertit une tension de sortie produite par ledit redresseur en une tension directe avec une autre valeur.

5. Système de communication de données selon la revendication 4, dans lequel chacun desdits redresseurs (36) est un redresseur onde entière qui exécute un redressement onde entière du signal de réception obtenu par la borne d'entrée du circuit d'entrée de haute impédance correspondant (22).

6. Système de communication de données selon la revendication 4, dans lequel chacun desdits convertisseurs continu-continu (38) est un convertisseur d'auto-excitation incorporant un oscillateur d'auto-excitation (46 ; 146 ; 246) qui actionne une oscillation d'auto-excitation avec une fréquence déterminée par une constante de circuit et une charge dudit circuit convertisseur continu-continu ; un transformateur (48 ; 148 ; 248) qui transforme une oscillation de sortie produite par ledit oscillateur d'auto-excitation ; et un bloc de sortie de redressement (50) qui commute la sortie dudit transformateur et qui fournit alors le courant commuté.

7. Système de communication de données selon la revendication 6, dans lequel chacun desdits oscillateurs d'auto-excitation comprend un circuit différentiel (154 ; 254) qui renferme un courant d'entrée transmis au transformateur correspondant (148 ; 248) dans un intervalle spécifié d'intensité de courant.

8. Système de communication de données selon la revendication 7, dans lequel chacun desdits circuits différentiels (254) contient un amplificateur différentiel (266).

9. Système de communication de données selon la revendication 6, 7 ou 8, dans lequel chacun desdits blocs de sortie de redressement (50) produit deux tensions de sortie, c'est à dire une tension de sortie positive et une tension de sortie négative.

10. Système de communication de données selon la revendication 1, dans lequel ledit bloc de sortie d'alimentation électrique (26) se compose d'un noeud reliant des bornes de sortie de tous lesdits circuits d'alimentation électrique (24).

11. Système de communication de données selon la revendication 1 ou 10, dans lequel ledit circuit d'interface de communication est un circuit d'interface RS 232C.

12. Système de communication de données selon la revendication 1, dans lequel ledit circuit d'interface de communication est un circuit d'interface RS 232C ; lesdits circuits de fixation de niveau (28) incorporent les résistances (30) qui limitent la puissance desdits signaux de réception et des diodes de fixation de niveau (32) fixant un niveau des signaux envoyés par lesdites résistances et produisant une sortie de celles-ci ; lesdits circuits d'entrée de haute impédance (22) comprennent en plus desdits circuits de fixation de niveau (28) des inverseurs de conversion de niveau (34) qui convertissent les signaux obtenus par lesdits circuits de fixation de niveau en un niveau prédéterminé et produisent la sortie des signaux convertis ; et lesdits circuits d'alimentation d'énergie (24) incorporent des redresseurs (36) qui produisent un redressement onde entière des signaux obtenus à partir des bornes d'entrée de ladite pluralité de circuits d'entrée de haute impédance ; et des convertisseurs continu-continu (38), c'est à dire des convertisseurs d'auto-excitation se composant des oscillateurs d'auto-excitation (46 ; 146 ; 246) qui réalisent une -auto-excitation avec une fréquence prédéterminée déterminée par une constante de circuit et une charge, des transformateurs (48 ; 148 ; 248) qui transforment une sortie d'oscillation produite par lesdits auto-oscillateurs, et des blocs de sortie de redressement (50) qui produisent une sortie en redressant la sortie desdits transformateurs.

13. Système de communication de données selon la revendication 12, dans lequel lesdits oscillateurs d'auto-excitation (146 ; 246) comprennent des circuits différentiels (154 ; 254) qui renferment des courants transmis auxdits transformateurs (148 ; 248) dans un intervalle spécifié d'intensité de courant.

14. Système de communication de données selon la revendication 13, dans lequel lesdits circuits différentiels (254) comprennent des amplificateurs différentiels (266).

# FIG. 1

EP 0 366 044 B1

EP 0 366 044 B1

# FIG. 2

RS 232C
SIGNAL

28

30

32

34

TTL SIGNAL

FIG. 3

INPUT SIGNAL
(AT RS 232C
VOLTAGE LEVEL)

GND

EP 0 366 044 B1

FIG. 4

EP 0 366 044 B1

FIG . 5